# EUROPEAN PATENT SPECIFICATION

(11) **EP 0 293 701 B1**
(45) Date of publication and mention of the grant of the patent: **10.08.1994**
(21) Application number: 88108176.4
(22) Date of filing: 20.05.1988
(51) Int. Cl.: G06F 15/76, G06F 15/68

(54) **Parallel neighborhood processing system and method**
Paralleles Nachbarverarbeitungssystem und -Verfahren
Système et méthode de traitement en parallèle d'éléments en rapport de voisinage

(30) Priority: 01.06.1987 US 57182
(43) Date of publication of application: 07.12.1988
(73) Proprietor: Applied Intelligent Systems, Inc., Ann Arbor, Michigan 48103 (US)
(72) Inventor: Wilson, Stephen S., Ann Arbor Michigan 48015 (US)
(74) Representative: Viering, Jentschura & Partner

(56) References cited:
- EP-A- 0 146 966
- 1987 IEEE INTERNATIONAL CONFERENCE ON COMPUTER DESIGN: VLSI IN COMPUTERS& PROCESSORS, 5th-8th October 1987, pages 324-327, IEEE,New York, US; A.L. FISHER et al.: "Architecture of a VLSI SIMD ProcessingElement"

## Description

This invention relates to a parallel processing system and a method for the processing and analysis of spatially related data arrays such as images, by means of a large array of programmable computing elements.

A number of systems have been developed which employ a large array of simple bit serial processors, each receiving the same instruction at any given time from a central controller. These types of systems are called "Single Instruction Multiple Data" (SIMD) parallel processors. There are various methods for communicating data from one processor to another. For example, the massively parallel processor described in K.E. Batcher, "Design of a Massively Parallel Processor," IEEE Trans. Comput. Sept. 1980, pp. 836-840, contains an array of 128x128 processors where image processing is an important application. Data is communicated between neighboring processing elements when an instruction that requires a neighborhood operation is performed. Image data arrays with dimensions larger than 1024x1024 are not uncommon. Since processor arrays this large are not economically feasible, the array must be broken into smaller data array sizes with dimensions equivalent to the size of the processor array.

One approach employing subarrays involves processing an image a scan line at a time using a linear array of identical processors linked by nearest-neighbor connections which receive instructions from a central controller in SIMD fashion. This approach is discussed in A.L. Fisher & P.T. Highnam, "Real Time Image Processing On Scan Line Array Processors," IEEE Workshop on Pattern Analysis and Image Database Management, Nov. 18-20, 1985, pp. 484-489. This article suggests that for the region operations used in vision processing tasks known as labeling and parameter extractions, the image can be processed by dividing the image into several vertical strips, and simultaneously processing the several vertical strips independently, with a merge operation for subsequently combining the strips being performed by a host computer. It also suggests that, where independently addressable column memories are available, the image could alternatively be processed in skewed fashion, so that an ordinary serial scan can be pipelined over the array. No array architecture for implementing this suggestion is disclosed however.

There are other types of SIMD processors, but they also generally experience the problem of data arrays larger than the processor array. Generally, all the memory associated with the processors is not large enough to hold the entire image along with extra memory capacity for computational results.

Thus, a large external memory is necessary, and mechanisms must be able to handle the input and output of small subarray segments at high speed to preserve computing efficiency.

Even if enough memory were supplied to each processor, so that the total memory of the ensemble of processors could contain the entire large array of image data there would still remain the problem of communicating data between the various subarrays when neighborhood operations are performed. During an instruction clock cycle, every processor receives the output of its associated memory, so that processors on the edges of the array cannot receive data from neighboring subarrays because the memories are already engaged in reading an entire subarray. Thus, multiple clock cycles would be needed in reading data when subarray and neighboring subarray data are both needed in a computation.

Therefore, a primary object of the present invention is to provide a simple method to allow a fixed array of processors to handle a larger array of data while performing operations which require neighborhood communication of data.

Another object of the invention is to link neighborhood data from the edges of the subarrays in a manner that does not require extra instructions.

A further object of the invention is to provide a means of handling subarrays of the data without resorting to large memories and associated input and output mechanisms remote from the processing array.

A still further object of the invention is to provide a means for data input and output of a large array of data in a fast and continuous manner from an external source where the data is treated as subarrays in the array of processors.

This invention provides a system for and method of handling the processing of subarrays of data where the entire image is held in memory associated with an array of processing elements. In the preferred method of this invention, extra memory is provided to the processors at the edge of the processor array. For convenience, these memories are called co-memories. Their primary function is to provide data from neighboring subarrays so that during an instruction cycle, both subarray data and edge data can be concurrently read without requiring additional cycle time or instructions.

During a memory write operation, where a subarray of data from the array of processing elements is written into their associated memories, data corresponding to the edges of that subarray are simultaneously written into co-memories. During a memory read operation, where a subarray of data is to be read from the memory associated with the array of processing elements, and used by the processing elements for neighborhood computations, data are also simultaneously read from the co-memories and transferred to the edge processing elements as neighboring data from adjacent subarrays. During such a memory read operation, the address of the co-memories will not be the same as the address of the processor array memories since the co-memories provide data from adjacent arrays.

According to one aspect of the invention there is provided a processing system for performing parallel processing operations in parallel upon data from a large array of data having a plurality of rows and at least 2n columns where n is an integer greater than one, by subdividing the large array into a plurality of subarrays, where each subarray has a plurality of rows and only n columns. The system comprises: an array of n individual processing units which includes an array of n processing elements which are linked together by a plurality of connections, and an array of n main memory means for storing data to be processed, where the array of n memory means is only n columns wide and has a sufficient number of rows to store at least two of the subarrays. Each of the individual processing units includes one of the processing elements and one of the main memory means. The system also comprises at least a first co-memory means, associated with the first main memory means, for storing the same data as stored in the first main memory means. The first co-memory means includes output means for providing a nearest neighbor connection between itself and the nth processing element. Typically, the system would also include a second co-memory means, associated with the nth main memory means, for storing the same data as is stored in the nth main memory means. This second co-memory means includes output means for providing a nearest neighbor connection between itself and the first processing element. In both the first and second co-memory means, the output means is switchable in response to a control signal received thereby to a predetermined state indicative of an edge condition associated with the large array.

According to a second aspect of the invention there is provided a processing system for performing parallel processing operations upon data from the large array of data having a plurality of rows and at least 2n columns, where n is an integer greater than one, by subdividing the large array into a plurality of subarrays, where each subarray has a plurality of rows and only n columns. The system comprises: an array of n individual processing units which include an array of neighborhood processing elements linked together by a plurality of nearest neighbor connections, an array of n data input and output means for transferring data into and out of the array of processing units, an array of n memory means for storing data associated with individual processing elements. Each of the individual processing elements includes one of the neighborhood processing elements, one of the data input and output means, and one of the memory means. The array of n memory means is sufficiently large to store at least two of the subarrays.

According to the third aspect of the invention there is provided, in a processing system for performing processing operations in parallel upon data from a large array of data having at least a plurality of rows and 2n columns a method of storing data for subsequent processing by the system. The method comprises the steps of: (a) providing, as at least part of the processing system, (1) an array of n processing units each having local memory means for storing plural units of data associated with distinct rows of the large array, (2) first co-memory means, associated with the first local memory means, for storing plural units of data, and (3) second co-memory means, associated with nth local memory means, for storing plural units of data; (b) concurrently transferring a first row of n units of data from n columns of a large array into the n local memory means such that each unit of data is transferred into a distinct local memory means; and (c) concurrently with step (b) transferring (1) into the first co-memory means the same unit of data being transferred into the first local memory means, and (2) into the second co-memory means the same unit of data being transferred into the nth local memory means.

According to a fourth aspect of the present invention there is provided in the same processing system, a method of locally storing data from the array in a rearranged manner for subsequent processing by the system. The method of this aspect of the invention comprises the steps of: (a) providing, as at least part of the processing system, (1) an array of n processing units each having local memory means for storing at least 2H rows by one column of data, (2) first co-memory means, associated with the first local memory means, for storing 2H rows by one column of data, and (3) second co-memory means, associated with nth local memory means, for storing 2H rows by one column of data; (b) concurrently storing 2H rows by n columns of data from the large array into the n local memory means; and (c) concurrently with step (b) storing (1) in the first co-memory means the same data being stored into the first local memory means, and (2) in the second co-memory means the same data being stored in nth local memory means.

According to a fifth aspect of the present invention, there is provided in a processing system of the same type as in the fourth aspect of the invention, a method of handling data for processing by the system. The method includes a step (a) identical to step (a) of the fourth aspect of the invention. The method also comprises the additional steps of (b) concurrently storing 2H rows by n columns of data from the large array into the n local memory means, wherein the data stored in the first H rows of the n local memory means is from a first subarray of H rows and a first set of n columns of the large array, and the data stored in the second H rows of the n local memory means is from a second array or the same H rows as in the first subarray and a second set of columns; (c) concurrently with step (b) storing in the same order (1) in the first co-memory means the same data being stored in the first local memory means, and (2) in the second co-memory means the same data being stored in the nth local memory means; and (d) concurrently reading data from the local memory means and at least one of the co-memory means.

According to a sixth aspect of the present invention, there is provided, in a processing system for performing processing operations in parallel upon data from a large array of data having at least H rows and 3n columns, a method of handling data for processing by the system. This method is similar to that of the fifth aspect of the present invention, except that the first and second co-memory means store 3H rows by one column of data and step (d) of this method requires concurrently reading data from the local memory means and from the first and second co-memory means.

These and other aspects, objects and advantages of the present invention will be more fully understood by reference to the following detailed description taken in conjunction with the various figures and appended claims.

The drawings form an integral part of the description of the preferred embodiment and are to be read in conjunction therewith. Like reference numerals designate identical components in the different Figures, where:
FIG. 1 is a block diagram of the processor forming the preferred embodiment of the present invention;
FIG. 2 illustrates how a full array of data can be broken into subarrays;
FIG. 3 shows how the subarrays are allocated in the memories associated with the processing array;
FIG. 4 shows details of the processing elements in the array of processing units;
FIG. 5 shows schematically how read cycles of subarrays are arranged; and
FIG. 6 shows schematically how write cycles of subarrays are arranged.

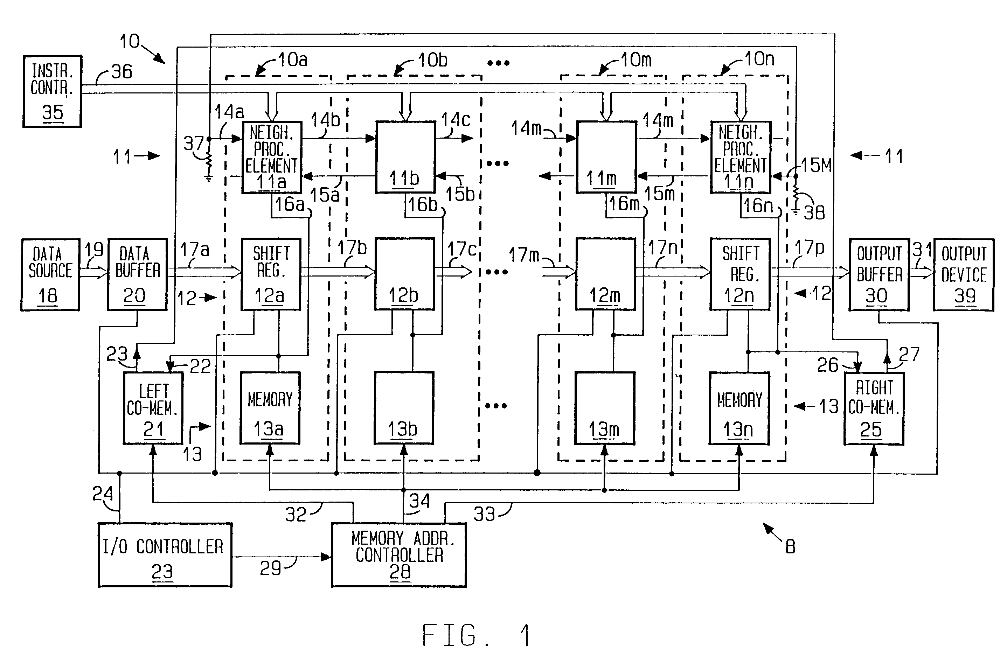

Referring to FIG. 1, the parallel processing system 8 of the present invention comprises an array 10 of identical individual digital processing units 10a-10n, which collectively contain an array 11 of neighborhood processing elements 11a-11n, an array 12 of data input and output means 12a-12n, and an array 13 of associated "local main" memories 13a-13n which are preferably "single-bit-wide" memories. The memories 13a-13n are local to (that is part of, and not remote from or external to) the system 8. On occasion memories 13a-13n are referred to as the main memories of the system 8. While theoretically the integer "n" could be a small as two, it typically would have a value of n = 2^{t} where t = 4, 5, 6, 7 or 8 (although t could be larger still). Individual processing unit 10b is typical and contains neighborhood processing element 11b, data input and output means 12b and memory 13b. Neighborhood processing elements 11b-11n receive data from neighboring processing elements on their immediate left via lines 14b-14n. Processing elements 11a-11m receive data from neighboring processing elements on their immediate right via lines 15a-15m. Each neighborhood processing element 11a-11n also connects to associated memories 13a-13n by means of bidirectional lines 16a-16n. The data input and output means 12a-12n are preferably multibit shift registers, which also connect to the bidirectional data lines 16a-16n. Shift registers 12a-12n are also connected to each other by means of unidirectional lines 17b-17n. Each of the shift registers 12a-12n includes a serial input and a serial output, and parallel inputs and parallel outputs, which provide parallel access to the individual stages thereof. These parallel inputs and outputs are connected to the lines 17.

First and second redundant co-memories 21 and 25 respectively support the main memories 13a and 13n, and are located locally in the system 8 like the main memories. The co-memories 21 and 25 have separate data input lines 22 and 26 and separate data output lines 23 and 27. The purpose of the co-memories is to provide appropriate neighborhood data via lines 23 and 27 to the neighborhood processing elements 11a and 11n which are on the extreme ends of the processor array.

DATA INPUT. Data input to the system for processing comes from data source 18 via multiple lines 19 wherein the data is in the form of a stream of words of B bits each, with B being an integer greater than one, and may be 8, 16 or 32 (or more) for example. The data stream is delivered to buffer 20 whose operation is controlled by I/O controller 23 via control lines 24. The first multibit shift register 12a receives data from buffer 20 via B input lines 17a corresponding to the B bits of data. The stream of data from buffer 20 is sequentially shifted through shift registers 12a-12n via lines 17a-17n. When shift registers 12a-12n contain a segment of n data words, each data word being B bits wide and corresponding to one of the n processing units 10, then I/O controller 23 stops shifting data through lines 17a-17n. Controller 23 then causes shift registers 12a-12n to shift out the data words contained within the shift registers in a bit serial manner to memories 13a-13n via lines 16a-16n, by cycling shift registers 12a-12n a total of B times, corresponding to the number of bits in the data words. A duplicate copy of the data word transmitted from shift register 12a via line 16a to memory 13a will also be simultaneously transmitted to and stored in first or left co-memory 21 via memory input data connection 22. Similarly, a duplicate copy of the data word transmitted from shift register 12n via line 16n to memory 13n will also be simultaneously transmitted to and stored in second or right co-memory 25 via memory input connection 26. During the memory write cycles, I/O controller 23 will signal memory address controller 28 via lines 29 to cause memory address lines 32, 34, and 33, to contain the same address for memories 13a-13n and co-memories 21 and 25 which specifies the locations wherein the B bits of data words are to be written.

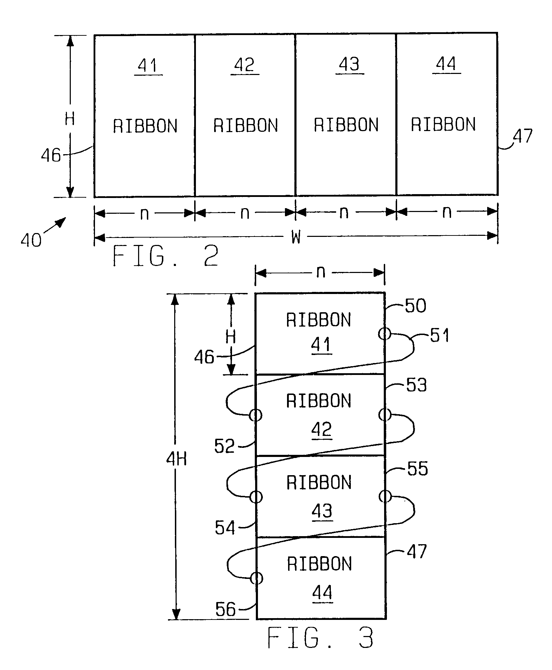

Together FIGS. 2 and 3 show how a large two-dimensional data array or image structure can be mapped into the memory structure 13 used in the present invention. FIG. 2 shows a large contiguous two-dimensional data array or matrix 40 having a first or horizontal dimension of W columns of data and a second or vertical dimension of H rows of data representing for example an image. The image has a first vertical or left edge 46 and second vertical or right edge 47. The data matrix is broken down into a plurality (such as four) subsections respectively called ribbon 41 - ribbon 44. Each of these vertical ribbons contains an array of data whose height is equal to the number of rows H of image 40, and whose width is equal to W/4 = n columns, where n is equal to the number of processing units 10a-10n in FIG. 1.

Since in this example the large data matrix 40 has a width W which exceeds the number of processing units by a factor of four, the data matrix can be restructured by breaking it into four ribbons 41-44 as it is stored in memories 13a-13n, 21, and 25. FIG. 3 shows the structure of the memory allocation. Ribbon 41 contains the left edge 46 of image 40. Also ribbon 41 has its own right edge 50 which is conceptually connected by line 51 to left edge 52 of ribbon 42. Similarly, conceptual connections are indicated between edges 53 and 54, and 55 and 56. Finally, the right edge 47 of ribbon 44 represents the right edge of image 40. The restructured image 40 shown in FIG. 3 will now fit in memories 13a-13n, where the combined memory array 13 comprised of memories 13a-13n is designed with enough capacity in terms of rows, i.e., at least 4H rows, to hold all of the ribbons. To make the foregoing discussion of FIGS. 2-3 even more concrete, consider, by way of example and not limitation, the case where image 40' is a two-dimensional array of data having 2K rows and 256 columns. The value of H would be equal to 2K or 2048, W would equal 256, and n would equal 64. In this case, the mapping of image 40 of FIG. 2 into image 40' of FIG. 3 having four ribbons placed one on top of another would require that memories 13a-13n each have a size of one bit x 8K bits in order to be able to store image 40'. The co-memories 21 and 25 would also each have a size of one bit x 8K bits.

READ-MODIFY-WRITE CYCLE. In order to perform neighborhood processing operations, three steps are required. First, data must be read from the associated memories 13a-13n to neighborhood processing elements 11a-11n which each have enough on-board storage to hold nearest neighbor data in the horizontal and vertical directions for each neighborhood processing element. Secondly, the neighborhood processing element computes a transformation of the neighboring data according to some specific instruction, thereby modifying the data. Thirdly, the modified data must be written back into associated memories 13a-13n. These three steps are respectively called the read subcycle, modify subcycle, and write subcycle. This sequence of three steps is called a read-modify-write cycle and may be repeated many times in order to process completely all the data according to some specified algorithm.

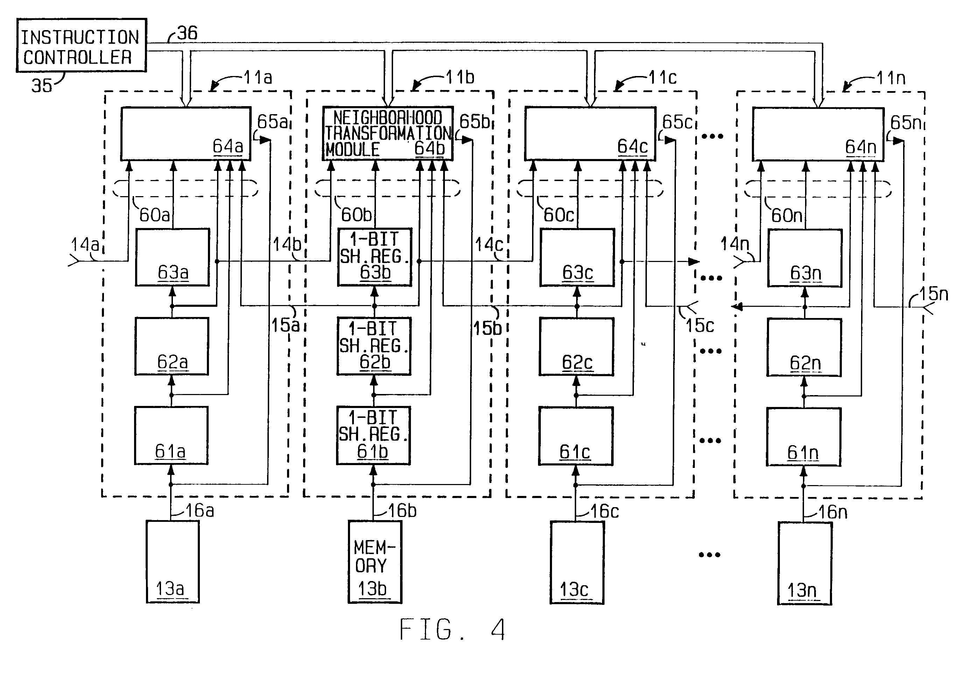

INITIAL READ OPERATIONS. Referring to FIG. 4, a detailed block diagram of several of the neighborhood processing elements 11 are shown. Each neighborhood processing element 11a-11n is identical in construction. Processing element 11b is typical and contains three 1-bit shift registers 61b-63b and a neighborhood transformation module 64b. During a computation cycle involving nearest neighbor operations, data is read from memories 13a-13n via lines 16a-16n to neighborhood processing elements 11a-11n. The data so read is shifted into and stored in shift registers 61a-61n. The data therein will correspond to a single first horizontal row of bits in one of the vertical ribbons of data. A second read operation accesses a second adjacent horizontal row of bits in the same vehicle ribbon of data, and causes the first row of bits to shift up into shift registers 62a-62n and the second row of bits to occupy shift registers 61a-61n. Any read operations thereafter are called read subcycles. The initial read operations are often referred to as "filling the pipeline."

READ SUBCYCLE. A third read operation of the next adjacent row of data in the same ribbon of data will in a like manner cause a further shifting of data so that the entire group of shift registers 61a-61n, 62a-62n, 63a-63n will contain three adjacent rows of single bit data from the same ribbon of data. Further read subcycles will cause the top row of data in shift registers 63a-63n to be lost, and the next set of three adjacent rows of data will then occupy the entire group of shift registers 61a-61n, which will therefore contain a complete set of nearest neighbor data for a specific row in a specific ribbon. However, referring back to FIG. 1, the processing elements at the edge of the array, namely elements 11a and 11n, only have one adjacent processing element each. For processing element 11a, the neighbor connection 14a corresponds to the left edge of some first ribbon and is connected to right co-memory output 27 via line 14a. Memory address controller 28 sends via line 33 an address to co-memory 25 which corresponds to the proper neighborhood data point on the right edge of an adjacent second ribbon. Similarly, for processing element 11n, neighborhood connection 14n corresponds to the right edge of this first ribbon and is connected to left co-memory output 23 via line 15n. Memory address controller 28 sends via line 32 an address to co-memory 21 which corresponds to the proper neighborhood data point on the left edge of an adjacent third ribbon.

MODIFY SUBCYCLE. Focusing attention on neighborhood processing element 11b in FIG. 4, neighborhood transformation module 64b is shown with five inputs respectively from left neighboring register 62a, upper register 63b, central register 62b, lower register 61, and right neighboring register 62c, received by module 64b via neighborhood input lines 60b. Neighborhood transformation module 64b is typically a programmable look-up-table whose functions are known to those skilled in the art. The look-up-table program is loaded by instruction controller 35 via communication lines 36 (which may include control lines and data lines) which transmits the same sequence of instructions to all neighborhood transformation modules 64a-64n where all neighborhood processing elements in the system 8 receive the same instruction at any given cycle in the instruction sequence. The modules 64a-64n would then transform their respective five data inputs received on respective neighborhood input lines 60a-60n into individual outputs on lines 65a-65n with the outputs 65 corresponding to the programmed look-up-table output function.

WRITE SUBCYCLE. Outputs 65a-65n contain the modified data, and when enabled, the modified data is written into memories 13a-13n via lines 16a-16n. In FIG. 1, the neighborhood processors at the edges of the array, namely processors 11a and 11n, also write the modified data into respective co-memories 21 and 25 through respective data input ports 22 and 26 via lines 16a and 16n. During write subcycles, memory address controller 28 causes the same address to be sent to memories 21, 13a-13n, and 25, via lines 32, 34, and 33, respectively.

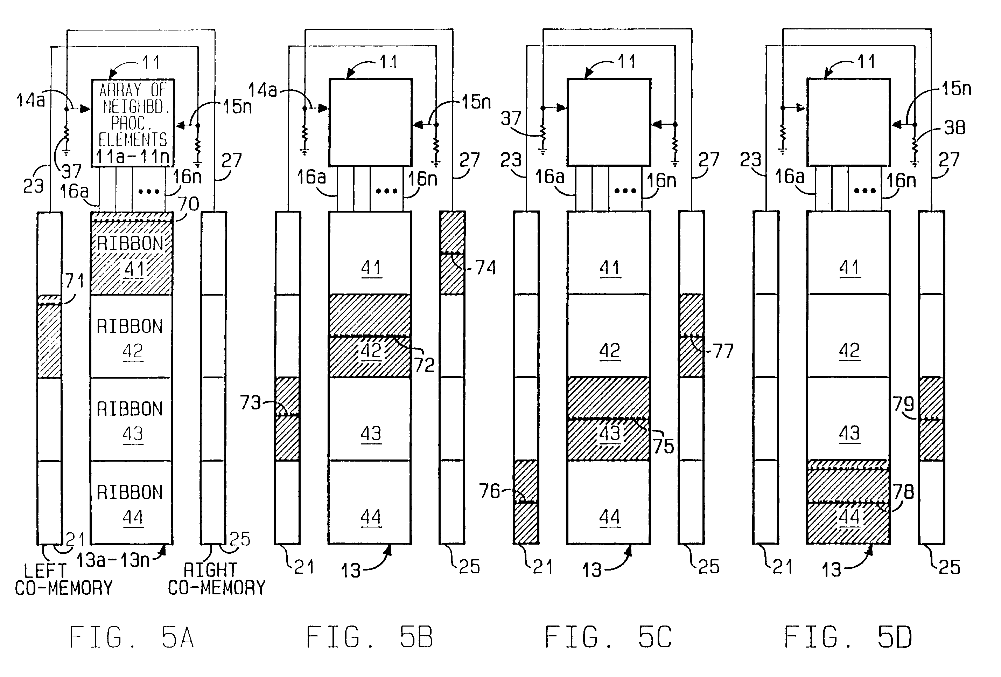

RIBBON CYCLES. FIGS. 5A-5D further illustrate memory read cycles for an entire image 40' that has been broken into ribbons 41-44 and stored in main memories 13a-13n and co-memories 24 and 25. All processing elements 11a-11n are shown as one block 11 in each of these Figures. In FIG. 5A, memory to processor connections 16a-16n are also shown connected to all memories 13a-13n which are also shown as one block 13. For illustrative purposes, the memory 13 is shown segmented into the four vertical ribbons 41, 42, 43, and 44 stored therein. Co-memories 21 and 25 are similarly shown. In order to read and process the uppermost horizontal row of data of an image where neighborhood data is also required, the first or uppermost row of the first ribbon represented by the broad strip 70 in FIG. 5A is read via lines 16a-16n to the processing elements 11a-11n. Simultaneously, the uppermost data bit of or associated with the second ribbon, represented by the broad stripe 71 of left co-memory 21, is read to the neighbor input 15n of the rightmost processing element 11n via line 23. Simultaneously, memory controller 28 shown in FIG. 1 causes a read inhibit of right co-memory 25, thereby causing data output line 27 to enter a high impedance state with the result that resistor 37 will pull down line 14a to a logic zero. The neighbor input 14a to leftmost neighborhood processing element 11a is then zero. This is equivalent to defining the data outside the left edge of the image to be zero.

Next, the second row of the first ribbon 41 is read and processed, and this continues until all of the rows within cross-hatched area 41, corresponding to the entire first ribbon, are read and processed. During this processing of first ribbon 41, the right co-memory 25 remains inhibited so that the neighbor input to the 14a leftmost processing element remains zero.

The read process then continues as shown in FIGS. 5B and 5C with the second and third ribbons 42 and 43 respectively, where co-memory addresses are appropriately displaced as indicated by the cross-hatching to give the proper neighborhood data to the edge memories. By way of example in FIG. 5B, when reading row "i" of bits in main memories 13a-13n associated with ribbon 42 (represented by broad stripe 72), the bit in row "i" of left co-memory 21 associated with ribbon 43 and the bit in row "i" of right co-memory 25 associated with ribbon 41 (represented by stripes 73 and 74) are also simultaneously read to provide neighbor inputs on line 15n to the rightmost processing element 11n and on line 14a to the leftmost processing element 11a respectively. Similarly in FIG. 5C, when row "i" of bits in main memory 13 associated with ribbon 43 (represented by broad stripe 75) is read, the bit 76 in row "i" of left co-memory 21 associated with ribbon 42 and the bit 77 in row "i" of right co-memory 25 associated with ribbon 43 are also simultaneously read to provide neighbor inputs. Thus, in order to perform a memory read cycle relative to a specific row address in ribbon 42 (or 43), the left co-memory address is "decremented" by H rows to the same row in the adjacent "lower" ribbon, while the right co-memory address is incremented to the same row in the adjacent "upper" ribbon.

FIG. 5D illustrates read cycles for the last ribbon 44 where the memory address controller 28 shown in FIG. 1 causes a read inhibit of left co-memory 21, thereby causing data output line 23 to enter a high impedance state, further causing resistor 38 to pull down line 15n to a logic zero. This is equivalent to defining the data outside the right edge 47 of the image 40 to be zero. However, as illustrated by broad stripes 78 and 79 representing row "i" of bits in main memories 13 associated with ribbon 44 and the bit in row "i" of right co-memory 25 respectively, when row "i" of ribbon 44 is read, the leftmost processor 11a simultaneously receives its left neighbor input from co-memory 25 via data output line 27 and input line 14a.

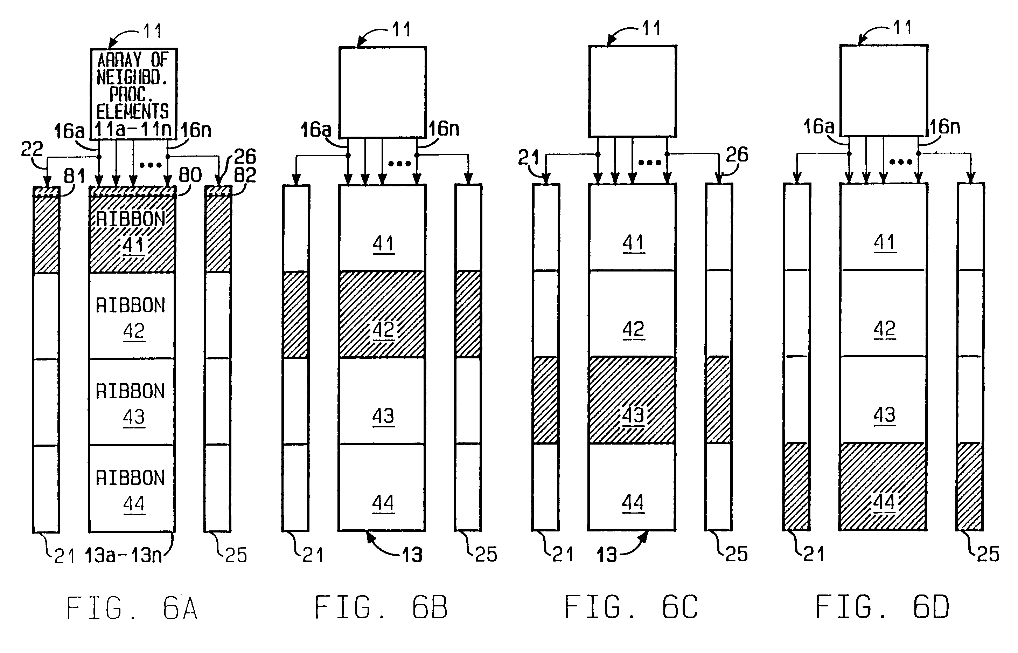

FIGS. 6A-6D more clearly illustrative memory write cycles for an entire image 40' broken down into ribbons 41-44, with the processing elements 11a-11n shown as one block 11 and memories 13a-13n shown as one block 13, as in FIG. 5. In order to write the uppermost rows of data of an image into memory array 13a-13n, the uppermost row of the first ribbon 41 is written as schematically shown by the broad stripe 80 in FIG. 6A. Data identical to that for memories 13a and 13n is simultaneously written into co-memories 21 and 25 at memory (row) locations as schematically shown by broad stripes 81 and 82. Next, the second uppermost row of said first ribbon 32 is written into memory array 13a-13n and data identical to that for main memories 13a and 13n is written into co-memories 21 and 25 at their second uppermost row. This process continues until all of the rows within the cross-hatched area 41 corresponding to the entire first ribbon are written. Similarly, the write process continues as shown in FIG. 6B, 6C, and 6D respectively with ribbons 42, 43, and 44, thereby completing the writing of the image 40' into memory array 13a-13n, and co-memories 21 and 25.

DATA OUTPUT. After the data is processed by a number of read-modify-write cycles specified by some algorithm, the results can then be output by means of shift registers 12a-12n, by means of a two-step process, which will now be described with reference to FIG. 1.

Step 1: First, I/O controller 23 via lines 29 causes memory address controller 28 to supply the address of a desired first row of data bits associated with the first ribbon 41 to memories 13a-13n via address lines 34. Then, I/O controller 23 clocks shift registers 12a-12n once via control lines 24, and causes data at the specified memory addresses to be latched up into the shift registers 12. I/O controller 23 proceeds in a similar manner, causing addresses for additional rows of data bits to be supplied by controller 28 to memories 13a-13n and clocking the accessed rows of data into shift registers 12a-12n until n words of B bits of multibit data are output from memories 13a-13n up into shift registers 12-12n. This array of data in the array of shift registers 12 may be considered a first horizontal row of a first ribbon of n words by B outputs.

Step 2: Next, I/O controller 23 clocks shift registers 12a-12n a total of n times, via control lines 24, and causes B bits of multibit data to be shifted to the right via lines 17b-17n, so that this first horizontal row of the first ribbon of n words of B bits of multibit data will enter output buffer 30 and be passed to output device 39, via lines 31.

Next, steps 1 and 2 will be repeated in sequence for a desired first row associated with each of the other ribbons so that the multibit data entering output buffer 30 as a result thereof will correspond contiguously to an entire first horizontal row of image 40 spanning the width W of image 40. The process continued until all horizontal rows comprising the entire image is read to output device 39.

From the foregoing, it can be appreciated that the neighborhood processing system described herein not only provides for the reliable accomplishment of the objects of the invention, but does so in a particularly effective and economical manner. A low cost system is readily achievable since the number of processing elements can be much less than the image width, provided the columnar memories 13a-13n are sufficiently large. While the time required to process the image is increased as the number of processing elements is reduced, and thus the number of ribbons per image increase, this trade-off is quite acceptable in many applications, especially where the over-all cost of the parallel neighborhood processing system is an important consideration.

For example, the invention described herein can be applied to other organizations of parallel processors such as processor arrays in two or more dimensions, in hypercube structures, and in tree structures. Also, the correlative terms "row" and "column", "vertical" and "horizontal", "left" and "right", and the like are used herein to make the description and claims more readily understandable. In this regard, those skilled in the art will readily appreciate such terms are often merely a matter of perspective, and are interchangeable merely by altering one's perspective, e.g., rows become columns and vice versa when one's view is rotated 90 degrees.

## Claims

1. A processing system (8) for performing parallel processing operations upon data from a large array (40) of data having a plurality of rows and at least 2n columns, where n is an integer greater than one, by subdividing the large array into a plurality of subarrays (41, 42, 43, 44), where each subarray has a plurality of rows and only n columns, the system comprising and characterized by:
an array (10) of n individual processing units (10a-10n) which includes an array (11) of n processing elements (11a-11n) which are linked together by a plurality of connections (14b-14n; 15a-15m), and an array (13) of n main memory means (13a-13n) for storing data to be processed, the array of n memory means being only n columns wide and having a sufficient number of rows to store at least two of the subarrays, each of the individual processing units including one of the processing elements and one of the main memory means, and
at least a first co-memory means (21), associated with the first main memory means (13a), for storing the same data as stored in the first main memory means.

2. A system (8) as in claim 1, further characterized in that the co-memory means (21) includes output means (23) for providing a nearest neighbor connection between itself and the nth processing element (11n).

3. A system (8) as in claim 2, further characterized in that the output means (23) of the co-memory means is switchable in response to a control signal (32) received by the co-memory means to a predetermined state indicative of a first edge condition associated with the large array.

4. A system as in claim 3, further characterized by:
means for selectively providing to the nearest neighbor connection associated with the output means (23) data indicative of the first edge condition of the large array; and
memory address controller means (28) for providing row addresses to the array (13) of n main memory means and the one co-memory means (21) to specify which row within each of the main memory means and the one co-memory means is to be concurrently accessed, the controller means (28) including means for providing row addresses to the co-memory means which are displaced from the row addresses provided to the main memory means by an amount corresponding to the number of rows in the subarrays.

5. A system as in claim 1, in which the large array of data has H rows and at least 3n columns, and wherein the system performs parallel processing operations upon data from the large array by subdividing the large array into at least three subarrays of H rows by n columns each, and the array of n memory means has a sufficient number of rows to store at least the three subarrays, the system further comprising:
second co-memory means (25), associated with the nth main memory means (13n), for storing the same data as stored in the nth main memory means, includes output means (27) for providing a nearest neighbor connection between itself and the first processing element (11a), and wherein the output means of the second co-memory means is switchable in response to a control signal (33) received thereby to a predetermined state indicative of a second edge condition associated with the large array.

6. A processing system (8) as in any one of claims 1 to 5, further characterized by:
the array (10) of n individual processing units (10a-10n) including an array (11) of neighborhood processing elements (11a-11n) linked together by a plurality of nearest neighbor connections and an array (12) of n data input and output means (12a-12n) for transferring data into and out of the array of processing units,
each of the individual processing units including one of the neighborhood processing elements, one of the data input and output means, and one of the memory means.

7. A system as in claim 6, further characterized in that:
the array of processing units include a plurality (16) of data lines (16a-16n) which interconnect each of the neighborhood processing elements to its respective data input and output means and its memory means, and
each of the data lines in a bidirectional line and each of the processing units includes at least one such line.

8. A system as in claim 7, further characterized in that
each of the memory means (13a-13n) is one-bit-wide,
each of the data input and output means (12a-12n) are one-bit-wide multibit shift registers,
each of the neighborhood processing elements (11a-11n) include a set (60) of neighborhood input lines constituting the nearest neighbor connections, each of the sets including first and second lines for receiving data from two nearest neighborhood processing elements,
each of the processing elements has neighborhood transformation means (64a-64n) for performing a transformation upon plural bits of input data received upon the set of neighborhood input lines associated with its processing element to produce an output,
each of the processing elements (11) has a local multibit shift register (61, 62, 63) provided with first, second and third states, with each stage including an input and an output wherein the output of the first stage (61) is connected to the input of the second stage, and the output of the second stage is connected to the input of the third stage (63), and
the set (60) of neighborhood input lines associated with each neighborhood processing element (11) further includes third, fourth and fifth lines respectively connected to the outputs of the first, second and third stages of the local multibit shift register which is part of its processing unit.

9. A system as in claim 8, further characterized in that:
the output of each neighborhood transformation means (64) is connected to the input of the first stage (61) of the local multibit shift register (12) of its processing element,
the one bidirectional line connected to each neighborhood processing element is connected to the input of the first stage, and
instruction controller means (35) for providing instructions to the array (10) of processing units, the instruction controller means including communication lines (36) connected to each of the neighborhood transformation means, and providing the same sequence of instructions to each of the neighborhood transformation means over the communication lines.

10. A system as in claim 6, further characterized in that:
the array (12) of data input and output means (12a-12n) is interconnected by a plurality (17) of nearest neighbor connections (17a-17n) between each of the data input and output means,
each of the data input and output means includes a multistage shift register (61, 62, 63) having a serial input (65) and a serial output, and parallel inputs and parallel outputs (17) which provide parallel access to the individual stages thereof,
the array of data input and output means includes means (20, 23, 30) for sequentially shifting in one direction through the multistage shift registers thereof a stream of data words having a plurality of bits equal in number to the number of stages in each of the shift registers, whereby each of the shift registers can be loaded with a distinct data word in the stream, and can output a distinct data word to the stream, and
the means for sequentially shifting includes I/O controller means (23) for providing control signals to control the shifting of data words sequentially through the multistage shift registers.

11. A method of storing data for subsequent processing by a processing system (8) for performing processing operations in parallel upon data from a large array (40) of data having at least a plurality of rows and 2n columns, where n is an integer greater than one, comprising and characterized by the steps of:
(a) providing, as at least part of the processing system, an array (10) of n processing units (10a-10n) each having local memory means (13a-13n) for storing plural units of data associated with distinct rows of the large array, first co-memory means (21), associated with the first local memory means (13a), for storing plural units of data, and second co-memory means (25), associated with the nth local memory means (13n), for storing plural units of data;
(b) concurrently transferring a first row of n units of data from n columns of the large array into the n local memory means such that each unit of data is transferred into a distinct local memory means; and
(c) concurrently with step (b) transferring into the first co-memory means (21) the same unit of data being transferred into the first local memory means (13a), and into the second co-memory means (25) the same unit of data being transferred into the nth local memory means (13n).

12. A method as in claim 11, wherein each of the n units of data are one bit, and the n columns from which the data is taken constitute a first group of n contiguous columns, the method further comprising and characterized by the steps of:
(d) concurrently transferring a second row of n units of data from n columns of the large array into the n local memory means such that each unit of data is transferred into a distinct local memory means;
(e) concurrently with step (d) transferring into the first co-memory means the same unit of data being transferred into the first local memory means (13a), and into the second co-memory means (25) the same unit of data being transferred into the nth local memory means (13n).

13. A method as in claim 12, further comprising and characterized by the steps of:
(f) concurrently transferring a first row of n units of data from a second group of n contiguous columns of the large array (40) into the n local memory means (13a-13n) such that each unit of data is transferred into a distinct local memory means;
(g) concurrently with step (f) transferring into the first co-memory means (21) the same unit of data being transferred into the first local memory means (13a), and into the second co-memory means (25) the same unit of data being transferred into the nth local memory means (13n);
(h) concurrently transferring a second row of n units of data from the second group of n columns of the large array into the n local memory means such that each unit of data is transferred into a distinct local memory means; and
(i) concurrently with step (h) transferring into the first co-memory means (21) the same unit of data being transferred into the first local memory means (13a), and into the second co-memory means (25) the same unit of data being transferred into the nth local memory means (13n).

14. A method as in claim 11, for reading data as well as storing data, further characterized by the step of:
(d) concurrently reading data from the local memory means (13) and at least one of the co-memory means (21), wherein the data is read from one row (70; 72; 75) of the n local memory means and a different row (71; 73; 76) of the at least one co-memory means (21).

15. A method as in claim 11, in which the large array (40) of data has at least H rows, and wherein:
each of the local memory means (13a-13n) and each of the co-memory means (21; 25) can store at least 2H rows x 1 column of data,
the data stored in the first H rows x n columns of the local memory means is from a first subarray (41) of H rows and a first set of n contiguous columns of the larger array, and the second H rows x n contiguous columns is from a second subarray (42) of the same H rows and a second set of n contiguous columns of the larger array, and
the width of the columns of the local memory means and the co-memories are each one bit wide, the method being further characterized by the step of:
(d) concurrently reading data from the local memory means (13a-13n) and at least one of the co-memory means (21), wherein the data is read from one row (70; 72; 75) of the n local memory means and a different row (71, 73, 76) of the at least one co-memory means.

16. A method as in claim 11, for reading data as well as storing data, in which the large array (40) of data has at least H rows, wherein:
each of the local memory means (13a-13n) and each of the co-memory means (21; 25) can store at least 3H rows x 1 column of data,
the rows (80, 81, 82) in the n local memory means (13) and the co-memory means have corresponding row addresses,
the data stored in the first H rows x n columns of the local memory means is from a first subarray (41) of H rows and a first set of n contiguous columns of the larger array, the data stored in the second H rows x n contiguous columns of the local memory means is from a second subarray (42) of the same H rows and a second set of n contiguous columns of the larger array, and the data stored in the third H rows x n contiguous columns of the local memory means is from a third subarray (43) of the same H rows and a third set of n contiguous columns of the larger array, the method being further characterized by the step of:
(d) concurrently reading data from the local memory means and the first and second co-memory means, with the data being read from one row (72) of the n local memory means, a different row (73) of the first co-memory means, and yet another row (74) of the second co-memory means, with the row addresses of the rows (73, 74) being concurrently read from the first and second co-memory means are H rows apart in different directions from the row address of the one row (72) of the n local memory means which is being read.

## Patentansprüche

1. Verarbeitungssystem (8) zum Ausführen paralleler Verarbeitungsvorgänge an Daten einer großen, eine Mehrzahl von Zeilen und wenigstens 2n Spalten (n = ganze Zahl größer 1) aufweisenden Datenanordnung (40) durch deren Unterteilung in eine Mehrzahl von Unteranordnungen (41, 42, 43, 44), die jeweils eine Mehrzahl von Zeilen und nur n Spalten aufweisen, wobei das System folgende kennzeichnenden Merkmale umfaßt: eine Anordnung (10) von n einzelnen Verarbeitungseinheiten (10a-10n), die eine Anordnung (11) von n Verarbeitungselementen (11a-11n), die durch eine Mehrzahl von Verbindungen (14b-14n; 15a-15m) miteinander verbunden sind, und eine Anordnung (13) von n Hauptspeichereinrichtungen (13a-13n) zum Speichern von zu verarbeitenden Daten enthàlt, wobei die Anordnung der n Hauptspeichereinrichtungen nur n Spalten breit ist und eine zum Speichern von wenigstens zwei Unteranordnungen ausreichende Zeilenzahl besitzt, und wobei die einzelnen Verarbeitungseinheiten jeweils eines der Verarbeitungselemente und eine der Hauptspeichereinrichtungen enthalten; und wenigstens eine erste Nebenspeichereinrichtung (21), die mit der ersten Hauptspeichereinrichtung (13a) zusammenhängt, um dieselben Daten zu speichern, die in der ersten Hauptspeichereinrichtung gespeichert werden.

2. System (8) nach Anspruch 1, ferner dadurch gekennzeichnet, daß die Nebenspeichereinrichtung (21) einen Ausgang (23) aufweist, der eine Nachbar-Verbindung zwischen sich selbst und dem n-ten Verarbeitungselement (11n) bereitstellt.

3. System (8) nach Anspruch 2, ferner dadurch gekennzeichnet, daß der Ausgang (23) der Nebenspeichereinrichtung in Reaktion auf ein von der Nebenspeichereinrichtung empfangenes Steuersignal (32) in einen vorgegebenen Zustand schaltbar ist, der eine erste mit der großen Datenanordnung zusammenhängende Randbedingung angibt.

4. System (8) nach Anspruch 3, ferner gekennzeichnet durch: eine Einrichtung, die ausgebildet ist, an die mit dem Ausgang (23) zusammenhängende Nachbar-Verbindung Daten zu liefern, welche die erste Randbedingung der großen Datenanordnung angeben; und eine Speicheradressensteuereinrichtung (28) zur Ausgabe von Zeilenadressen an die Anordnung (13) von n Hauptspeichereinrichtungen und die Nebenspeichereinrichtung (21), um anzugeben, auf welche Zeile innerhalb jeder Hauptspeichereinrichtung und der Nebenspeichereinrichtung gleichzeitig zugegriffen werden soll, wobei die Steuereinrichtung (28) ausgebildet ist, an die Nebenspeichereinrichtung Zeilenadressen auszugeben, die gegenüber den an die Hauptspeichereinrichtung ausgegebenen Zeilenadressen um einen der Zeilenanzahl in den Unteranordnungen entsprechenden Betrag versetzt sind.

5. System nach Anspruch 1, bei dem die große Datenanordnung H Zeilen und wenigstens 3n Spalten aufweist, wobei das System parallele Verarbeitungsvorgänge an Daten der großen Datenanordnung durchführt, indem es letztere in wenigstens drei Unteranordnungen von jeweils H Zeilen und n Spalten unterteilt, und die Anordnung von n Speichereinrichtungen eine zum Speichern der wenigstens drei Unteranordnungen ausreichende Zeilenzahl besitzt, und wobei das System ferner folgendes Merkmal aufweist: eine zweite Nebenspeichereinrichtung (25), die mit der n-ten Hauptspeichereinrichtung (13n) verbunden ist, um dieselben Daten wie die n-te Hauptspeichereinrichtung zu speichern, und einen Ausgang (27) aufweist, der eine Nachbar-Verbindung zwischen sich selbst und dem ersten Verarbeitungselement (11a) bereitstellt, wobei der Ausgang der zweiten Nebenspeichereinrichtung in Reaktion auf ein von ihr empfangenes Steuersignal (33) in einen vorgegebenen Zustand schaltbar ist, der eine zweite mit der großen Datenanordnung zusammenhängende Randbedingung angibt.

6. Verarbeitungssystem (8) nach einem der Ansprüche 1 bis 5, ferner dadurch gekennzeichnet, daß die Anordnung (10) von n einzelnen Verarbeitungseinheiten (10a-10n) eine Anordnung (11) von Nachbar-Verarbeitungselementen (11a-11n) enthält, die durch eine Mehrzahl von Verbindungen zum nächsten Nachbarn sowie durch eine Anordnung (12) von n Daten-Ein/Ausgangsorganen (12a-12n) miteinander verbunden sind, um Daten in die Anordnung von Verarbeitungseinheiten einzugeben und aus ihr auszugeben, und daß die einzelnen Verarbeitungseinheiten jeweils eines der Nachbar-Verarbeitungselemente, eines der Daten-Ein/Ausgangsorgane und eine der Speichereinrichtungen aufweisen.

7. System nach Anspruch 6, ferner dadurch gekennzeichnet, daß die Anordnung von Verarbeitungseinheiten eine Mehrzahl (16) von Datenleitungen (16a-16n) aufweist, welche die Nachbar-Verarbeitungselemente jeweils mit ihren zugehörigen Daten-Ein/Ausgangsorganen und Speichereinrichtungen verbinden, und daß die Datenleitungen jeweils Zweirichtungs-Datenleitungen sind und die Verarbeitungseinheiten jeweils mindestens eine solche Datenleitung aufweisen.

8. System nach Anspruch 7, ferner dadurch gekennzeichnet, daß die Speichereinrichtungen (13a-13n) jeweils ein Bit breit sind; die Daten-Ein/Ausgangsorgane (12a-12n) jeweils ein Bit breite mehrstufige Schieberegister sind; die Nachbar-Verarbeitungselemente (11a-11n) jeweils einen Satz (60) von Nachbar-Eingangsleitungen aufweisen, welche die Verbindungen zum nächsten Nachbarn darstellen, wobei jeder Satz eine erste und eine zweite Leitung umfaßt, um Daten von zwei nächst benachbarten Verarbeitungselementen zu empfangen; die Verarbeitungselemente jeweils eine Nachbar-Transformationseinheit (64a-64n) aufweisen, die ausgebildet ist, eine Transformation an mehreren Eingangsdatenbits durchzuführen, die auf dem ihrem Verarbeitungselement zugeordneten Satz von Nachbar-Eingangsleitungen empfangen werden, um ein Ausgangssignal zu erzeugen; die Verarbeitungselemente (11) jeweils ein örtliches mehrstufiges Schieberegister (61, 62, 63) aufweisen, das mit einer ersten, einer zweiten und einer dritten Stufe versehen ist, wobei jede Stufe einen Eingang und einen Ausgang besitzt, der Ausgang der ersten Stufe (61) mit dem Eingang der zweiten Stufe verbunden ist und der Ausgang der zweiten Stufe mit dem Eingang der dritten Stufe (62) verbunden ist; und daß der mit jedem Nachbar-Verarbeitungselement (11) zusammenhängende Satz (60) von Nachbar-Eingangsleitungen ferner eine dritte, eine vierte und eine fünfte Leitung enthält, die mit dem Ausgang der ersten, zweiten bzw. dritten Stufe des örtlichen mehrstufigen Schieberegisters verbunden sind, das Teil der zugehörigen Verarbeitungseinheit ist.

9. System nach Anspruch 8, ferner dadurch gekennzeichnet, daß der Ausgang jeder Nachbar-Transformationseinheit jeweils mit dem Eingang der ersten Stufe (61) des örtlichen mehrstufigen Schieberegisters (12) des zugehörigen Verarbeitungselements verbunden ist; die mit jedem Nachbar-Verarbeitungselement verbundene Zweirichtungsleitung an den Eingang der ersten Stufe angeschlossen ist; und ein Befehlssteuerorgan (35) zum Ausgeben von Befehlen an die Anordnung (10) von Verarbeitungseinheiten vorhanden ist, das mit jeder Nachbar-Transformationseinheit verbundene Datenverkehrsleitungen (36) aufweist und über diese an jede Nachbar-Transformationseinheit dieselbe Folge von Befehlen liefert.

10. System nach Anspruch 6, ferner dadurch gekennzeichnet, daß die Anordnung (12) von Daten-Ein/Ausgangsorganen (12a-12n) durch eine Mehrzahl (17) von Verbindungen (17a-17n) zum nächsten Nachbarn jeweils zwischen den Daten-Ein/Ausgangsorganen untereinander verbunden sind; die Daten-Ein/Ausgangsorgane jeweils ein mehrstufiges Schieberegister (61, 62, 63) mit einem seriellen Eingang (65) und einem seriellen Ausgang sowie mit parallelen Eingängen und parallelen Ausgängen (17), die einen parallelen Zugang zu den einzelnen Stufen des mehrstufigen Schieberegisters bereitstellen, enthalten; die Anordnung von Daten-Ein/Ausgangsorganen eine Einrichtung (20, 23, 30) enthält, die ausgebildet ist, durch die zugeordneten mehrstufigen Schieberegister sequentiell in einer Richtung einen Strom von Datenwörtern zu schieben, die eine Mehrzahl von Bits aufweisen, deren Anzahl gleich ist der Anzahl von Stufen in jedem Schieberegister, wodurch jedes Schieberegister mit einem unterschiedlichen Datenwort aus dem Datenstrom geladen werden kann und ein unterschiedliches Datenwort in den Datenstrom ausgeben kann; und daß die Einrichtung zum sequentiellen Verschieben eine Ein/Ausgabe-Steuereinheit (23) aufweist, die ausgebildet ist, Steuersignale auszugeben, die das sequentielle Verschieben von Datenwörtern durch die mehrstufigen Schieberegister steuern.

11. Verfahren zum Speichern von Daten für deren nachfolgende Verarbeitung durch ein Verarbeitungssystem (8) zum parallelen Ausführen von Verarbeitungsvorgängen an Daten einer großen, wenigstens eine Mehrzahl von Zeilen und 2n Spalten aufweisenden Datenanordnung (40), wobei n eine ganze Zahl größer als 1 ist und das Verfahren folgende kennzeichnende Schritte aufweist:
(a) es wird - zumindest als Teil des Verarbeitungssystems - eine Anordnung (10) von n Verarbeitungseinheiten (10a-10n) bereitgestellt, die jeweils eine örtliche Speichereinrichtung (13a-13n) aufweisen, die ausgebildet ist, mehrere, unterschiedlichen Zeilen der großen Datenanordnung zugeordnete Dateneinheiten zu speichern; ferner werden eine erste, mit der ersten örtlichen Speichereinrichtung (13a) verbundene Nebenspeichereinrichtung (21) zum Speichern mehrerer Dateneinheiten und eine zweite, mit der n-ten örtlichen Speichereinrichtung (13n) verbundene Nebenspeichereinrichtung (25) zum Speichern mehrerer Dateneinheiten bereitgestellt;
(b) eine erste Zeile von n Dateneinheiten aus n Spalten der großen Datenanordnung wird gleichzeitig in die n örtlichen Speichereinrichtungen übertragen, dergestalt daß jede Dateneinheit in eine unterschiedliche örtliche Speichereinrichtung übertragen wird; und
(c) gleichzeitig mit Schritt (b) werden die gleiche Dateneinheit, die gerade in die erste örtliche Speichereinrichtung (13a) übertragen wird, in die erste Nebenspeichereinrichtung (21) und die gleiche Dateneinheit, die gerade in die n-te örtliche Speichereinrichtung (13n) übertragen wird, in die zweite Nebenspeichereinrichtung (25) übertragen.

12. Verfahren nach Anspruch 11, bei dem die n Dateneinheiten jeweils ein Bit sind und die n Spalten, aus denen die Daten entnommen werden, eine erste Gruppe von n zusammenhängenden Spalten darstellen, wobei das Verfahren ferner folgende kennzeichnende Schritte umfaßt:
(d) eine zweite Zeile von n Dateneinheiten aus n Spalten der großen Datenanordnung wird gleichzeitig in die n örtlichen Speichereinrichtungen übertragen, dergestalt daß jede Dateneinheit in eine unterschiedliche örtliche Speichereinrichtung übertragen wird; und
(e) gleichzeitig mit Schritt (d) werden die gleiche Dateneinheit, die gerade in die erste örtliche Speichereinrichtung (13a) übertragen wird, in die erste Nebenspeichereinrichtung (21) und die gleiche Dateneinheit, die gerade in die n-te örtliche Speichereinrichtung (13n) übertragen wird, in die zweite Nebenspeichereinrichtung (25) übertragen.

13. Verfahren nach Anspruch 12, ferner gekennzeichnet durch folgende Schritte:
(f) eine erste Zeile von n Dateneinheiten aus einer zweiten Gruppe von n zusammenhängenden Spalten der großen Datenanordnung (40) wird gleichzeitig in die n örtlichen Speichereinrichtungen (13a-13n) übertragen, dergestalt daß jede Dateneinheit in eine unterschiedliche örtliche Speichereinrichtung übertragen wird;
(g) gleichzeitig mit Schritt (f) werden die gleiche Dateneinheit, die gerade in die erste örtliche Speichereinrichtung (13a) übertragen wird, in die erste Nebenspeichereinrichtung (21) und die gleiche Dateneinheit, die gerade in die n-te örtliche Speichereinrichtung (13n) übertragen wird, in die zweite Nebenspeichereinrichtung (25) übertragen;
(h) eine zweite Zeile von n Dateneinheiten aus der zweiten Gruppe von n Spalten der großen Datenanordnung wird gleichzeitig in die n örtlichen Speichereinrichtungen übertragen, dergestalt daß jede Dateneinheit in eine unterschiedliche örtliche Speichereinrichtung übertragen wird; und
(i) gleichzeitig mit Schritt (h) werden die gleiche Dateneinheit, die gerade in die erste örtliche Speichereinrichtung (13a) übertragen wird, in die erste Nebenspeichereinrichtung (21) und die gleiche Dateneinheit, die gerade in die n-te örtliche Speichereinrichtung (13n) übertragen wird, in die zweite Nebenspeichereinrichtung (25) übertragen.

14. Verfahren nach Anspruch 11, sowohl zum Lesen als auch zum Speichern von Daten, ferner gekennzeichnet durch folgenden Schritt:
(d) Daten aus der örtlichen Speichereinrichtung (13) und aus wenigstens einer der Nebenspeichereinrichtungen (21) werden gleichzeitig gelesen, und zwar aus einer Zeile (70; 72; 75) der n örtlichen Speichereinrichtungen und einer anderen Zeile (71; 73; 76) der wenigstens einen Nebenspeichereinrichtung (21).

15. Verfahren nach Anspruch 11, bei dem die große Datenanordnung (40) wenigstens H Zeilen besitzt und wobei: die örtlichen Speichereinrichtungen (13a-13n) und die Nebenspeichereinrichtungen (21; 25) Daten jeweils in wenigstens 2H Zeilen x 1 Spalte speichern können; die Daten, die in den ersten H Zeilen x n Spalten der örtlichen Speichereinrichtung gespeichert sind, aus einer ersten Unteranordnung (41) von H Zeilen und einem ersten Satz von n zusammenhängenden Spalten der größeren Datenanordnung stammen und die zweiten H Zeilen x n zusammenhängenden Spalten aus einer zweiten Unteranordnung (42) derselben H Zeilen und einem zweiten Satz von n zusammenhängenden Spalten der größeren Datenanordnung stammen; und die Breite der Spalten der örtlichen Speichereinrichtung und der Nebenspeichereinrichtungen jeweils ein Bit beträgt und das Verfahren ferner durch folgenden Schritt gekennzeichnet ist:
(d) Daten aus der örtlichen Speichereinrichtung (13) und aus wenigstens einer der Nebenspeichereinrichtungen (21) werden gleichzeitig gelesen, und zwar aus einer Zeile (70; 72; 75) der n örtlichen Speichereinrichtungen und einer anderen Zeile (71; 73; 76) der wenigstens einen Nebenspeichereinrichtung (21).

16. Verfahren nach Anspruch 11, sowohl zum Lesen als auch zum Speichern von Daten, wobei die große Datenanordnung (40) wenigstens H Zeilen besitzt und wobei ferner: die örtlichen Speichereinrichtungen (13a-13n) und die Nebenspeichereinrichtungen (21; 25) Daten jeweils in wenigstens 3H Zeilen x 1 Spalte speichern können; die Zeilen (80, 81, 82) in der örtlichen Speichereinrichtung (13) und in den Nebenspeichereinrichtungen entsprechende Zeilenadressen haben; die Daten, die in den ersten H Zeilen x n Spalten der örtlichen Speichereinrichtung gespeichert sind, aus einer ersten Unteranordnung (41) von H Zeilen und einem ersten Satz von n zusammenhängenden Spalten der größeren Datenanordnung stammen, die Daten, die in den zweiten H Zeilen x n zusammenhängenden Spalten der örtlichen Speichereinrichtung gespeichert sind, aus einer zweiten Unteranordnung (42) derselben H Zeilen und einem zweiten Satz von n zusammenhängenden Spalten der größeren Datenanordnung stammen, und die Daten, die in den dritten H Zeilen x n zusammenhängenden Spalten der örtlichen Speichereinrichtung gespeichert sind, aus einer dritten Unteranordnung (43) derselben H Zeilen und einem dritten Satz von n zusammenhängenden Spalten der größeren Datenanordnung stammen, wobei das Verfahren ferner durch folgenden Schritt gekennzeichnet ist:
(d) Daten aus der örtlichen Speichereinrichtung und der ersten und der zweiten Nebenspeichereinrichtung werden gleichzeitig gelesen, und zwar werden die Daten aus einer Zeile (72) der n örtlichen Speichereinrichtungen, einer anderen Zeile (73) der ersten Nebenspeichereinrichtung und wiederum einer anderen Zeile (74) der zweiten Nebenspeichereinrichtung gelesen, wobei die Zeilenadressen der Zeilen (73, 74), die gleichzeitig aus der ersten und der zweiten Nebenspeichereinrichtung gelesen werden, in entgegengesetzten Richtungen jeweils um H Zeilen gegenüber der Zeilenadresse der gerade gelesenen einen Zeile (72) der n örtlichen Speichereinrichtungen versetzt sind.

## Revendications

1. Système de traitement (8) pour exécuter des opérations parallèles de traitement sur des données dans un grand groupement de données (40) comprenant une pluralité de lignes et au moins 2n colonnes, n étant un chiffre entier plus grand que 1, en subdivisant le grand groupement en une pluralité de sous-groupements (41, 42, 43, 44), chaque sous-groupement ayant une pluralité de lignes et uniquement n colonnes, le système comprenant les caractéristiques suivantes: un arrangement (10) de n unités de traitement individuelles (10a-10n) qui inclue un arrangement (11) de n éléments de traitement (11a-11n) reliés ensemble par une pluralité de connections (14b-14n; 15a-15m), et un arrangement (13) de n mémoires principales (13a-13n) pour stocker les données à traiter, l'arrangement de n mémoires principales ne comprenant que n colonnes en largeur et ayant un nombre suffisant de lignes pour stocker au moins deux des sous-groupements, chacune des unités de traitement individuelles incluant un des éléments de traitement et une des mémoires principales, et au moins une première co-mémoire (21), associée à la première mémoire principale (13a), pour stocker les mêmes données que celles dans la première mémoire principale.

2. Le système (8) selon la revendication 1, caractérisé en plus par le fait que la co-mémoire (21) comprend une sortie (23) pour établir une liaison voisine entre elle-même et le n-ième élément de traitement (11n).

3. Le système (8) selon la revendication 2, caractérisé en plus par le fait que la sortie (23) de la co-mémoire (21) peut être basculée, en fonction d'un signal de contrôle (32) reçu par la co-mémoire, dans un état prédéterminé indiquant une première condition marginale associée avec le grand groupement.

4. Le système selon la revendication 3, caractérisé en plus par les caractéristiques suivantes: un dispositif pour fournir sélectivement à la liaison voisine associée avec la sortie (23), des données indiquant la première condition marginale du grand groupement; et un dispositif de contrôle (28) des adresses des mémoires pour émettre des adresses de lignes à l'arrangement (13) des n mémoires principales et à la co-mémoire (21) pour désigner quelle ligne dans chacune des mémoires principales et dans la co-mémoire est à accéder simultanément, le dispositif de contrôle (28) comprenant des moyens pour fournir à la co-mémoire des adresses de lignes déplacées, par rapport aux adresses de lignes fournies aux mémoires principales, d'un montant correspondant au nombre de lignes dans les sous-groupements.

5. Le système selon la revendication 1, dans lequel le grand groupement de données comprend H lignes et au moins 3n colonnes, et le système exécute des opérations parallèles de traitement sur des données du grand groupement en subdivisant le grand groupement en au moins trois sous-groupements comprenant chacun H lignes par n colonnes, l'arrangement de n mémoires ayant un nombre suffisant de lignes pour stocker au moins les trois sous-groupements, le système comprenant en plus: une deuxième co-mémoire (25), associée à la n-ième mémoire principale (13n), pour stocker les mêmes données que la n-ième mémoire principale, et ayant une sortie (27) pour établir une liaison voisine entre elle-même et le premier élément de traitement (11a), la sortie de la deuxième co-mémoire pouvant être basculée, en fonction d'un signal de contrôle (33) reçu par la deuxième co-mémoire, dans un état prédéterminé indiquant une deuxième condition marginale associée avec le grand groupement.

6. Le système de traitement (8) selon l'une quelconque des revendications 1 à 5, en plus caractérisé par le fait que l'arrangement (10) des n unités de traitement (10a-10n) inclue un arrangement (11) d'éléments voisins de traitement (11a-11n) liés ensemble par une pluralité de liaisons voisines et un arrangement (12) de n organes (12a-12n) d'entrée et de sortie de données pour transférer des données vers et depuis l'arrangement des unités de traitement, chacune des unités de traitement individuelles comprenant un des éléments voisins de traitement, un des organes d'entrée et de sortie de données, et une des mémoires.

7. Le système selon la revendication 6, en plus caractérisé par le fait que l'arrangement des unités de traitement inclue une pluralité (16) de conducteurs de données (16a-16n) reliant chacun des éléments voisins de traitement à son organe respectif d'entrée et de sortie de données et à sa mémoire, et chacun des conducteurs de données est un conducteur bidirectionnel, et chacune des unités de traitement comprend au moins un tel conducteur.

8. Le système selon la revendication 7, en plus caractérisé par le fait que la largeur de chacune des mémoires (13a-13n) est d'un bit; chacun des organes (12a-12n) d'entrée et de sortie de données est constitué par un registre à décalage à plusieurs étages dont la largeur est d'un bit; chacun des éléments voisins de traitement (11a-11n) inclue un ensemble (60) de conducteurs voisins d'entrée constituant les liaisons voisines, chacun des ensembles comprenant un premier et un deuxième conducteur pour recevoir des données depuis deux éléments voisins de traitement; chacun des éléments de traitement comprend une unité voisine de transformation (64a-64n) pour exécuter une transformation sur plusieurs bits de données d'entrée reçues via l'ensemble des conducteurs voisins d'entrée associés à son élément de traitement pour produire un signal de sortie; chacun des éléments de traitement (11) comprend un registre local à décalage à plusieurs étages (61, 62, 63) équipé d'un premier étage, d'un deuxième étage et d'un troisième étage, chaque étage ayant une entrée et une sortie, la sortie du premier étage (61) étant raccordée à l'entrée du deuxième étage (62), et la sortie du deuxième étage étant raccordée à l'entrée du troisième étage (63); et l'ensemble (60) de conducteurs voisins d'entrée associé à chaque élément voisin de traitement (11) comprend en plus un troisième conducteur, un quatrième conducteur et un cinquième conducteur reliés respectivement à la sortie du premier étage, à la sortie du deuxième étage et à la sortie du troisième étage du registre local à décalage à plusieurs étages faisant partie de son unité de traitement.

9. Le système selon la revendication 8, caractérisé en plus par le fait que: la sortie de chaque unité voisine de transformation (64) est branchée à l'entrée du premier étage (61) du registre local (12) à décalage à plusieurs étages de son élément de traitement; le conducteur bidirectionnel connecté à chaque élément voisin de traitement est reliée à l'entrée du premier étage, et un dispositif de contrôle d'instructions (35) est pourvu pour émettre des instructions à l'arrangement (10) des unités de traitement, le dispositif de contrôle d'instructions comprenant des conducteurs de communication (36) connectés à chacune des unités voisines de transformation, et fournissant via les conducteurs de communication la même séquence d'instruction à chacune des unités voisines de transformation.

10. Le système selon la revendication 6, caractérisé en plus par le fait que: l'arrangement (12) des organes (12a-12n) d'entrée et de sortie de données est interconnecté par une pluralité (17) de liaisons voisines (17a-17n) entre chacun des organes d'entrée et de sortie de données; chacun des organes d'entrée et de sortie de données comprend un registre à décalage à plusieurs étages (61, 62, 63) ayant une entrée sérielle (65) et une sortie sérielle, ainsi que des entrées parallèles et des sorties parallèles (17) établissant un accès parallèle aux étages individuels du registre; l'arrangement des organes d'entrée et de sortie de données comprend des moyens (20, 23, 30) pour décaler séquentiellement dans une direction, à travers leurs registres à décalage à plusieurs étages, un flux de mots de données ayant une pluralité de bits dont le nombre équivaut le nombre d'étages dans chacun des registres à décalage, de façon que chacun des registres à décalage puisse être chargé d'un mot de données distinct dans le flux, et puisse émettre un mot de données distinct vers le flux, et les moyens de décalage séquentiel comprennent un dispositif (23) de contrôle d'entrée et de sortie pour fournir des signaux de contrôle pour contrôler le décalage séquentiel des mots de données à travers les registres à décalage à plusieurs étages.

11. Méthode pour stocker des données pour un traitement suivant par un système de traitement (8) pour exécuter des opérations de traitement en parallèle sur des données dans un grand groupement de données (40) comprenant au moins une pluralité de lignes et 2n colonnes, n étant un chiffre entier plus grand que 1, la méthode comprenant, et étant caractérisée par, les étapes suivantes:
(a) on pourvoit, au moins comme une partie du système de traitement, un arrangement (10) de n unités de traitement (10a-10n) comprenant chacune une mémoire locale (13a-13n) pour stocker plusieurs unités de données associées à des lignes distinctes du grand groupement, une première co-mémoire (21), associée à la première mémoire (13a), pour stocker plusieurs unités de données, et une deuxième co-mémoire (25), associée à la n-ième mémoire (13n), pour stocker plusieurs unités de données;
(b) on transfère simultanément une première ligne de n unités de données depuis n colonnes du grand groupement vers les n mémoires locales de manière que chaque unité de données soit transférée à une mémoire locale distincte;
(c) simultanément avec l'étape (b), on transfère à la première co-mémoire (21) la même unité de données qui est en train d'être transférée à la première mémoire locale (13a), et à la deuxième co-mémoire (25) la même unité de données qui est en train d'être transférée à la n-ième mémoire locale (13n).

12. La méthode selon la revendication 11, chacune des n unités de données étant un seul bit, et les n colonnes, dans lesquelles les données sont prises, constituant un premier groupe de n colonnes contiguës, la méthode comprenant en plus les étapes caractérisantes suivantes:
(d) on transfère simultanément une deuxième ligne de n unités de données depuis n colonnes du grand groupement vers les n mémoires locales de manière que chaque unité de données soit transférée à une mémoire locale distincte;
(e) simultanément avec l'étape (d), on transfère à la première co-mémoire la même unité de données qui est en train d'être transférée à la première mémoire locale (13a), et à la deuxième co-mémoire (25) la même unité de données qui est en train d'être transférée à la n-ième mémoire locale (13n).

13. La méthode selon la revendication 12, comprenant en plus les étapes caractérisantes suivantes:
(f) on transfère simultanément une première ligne de n unités de données depuis un deuxième groupe de n colonnes contiguës du grand groupement (40) vers les n mémoires locales (13a-13n) de manière que chaque unité de données soit transférée à une mémoire locale distincte;
(g) simultanément avec l'étape (f), on transfère à la première co-mémoire (21) la même unité de données qui est en train d'être transférée à la première mémoire locale (13a), et à la deuxième co-mémoire (25) la même unité de données qui est en train d'être transférée à la n-ième mémoire locale (13n);
(h) on transfère simultanément une deuxième ligne de n unités de données depuis le deuxième groupe de n colonnes du grand groupement vers les n mémoires locales de manière que chaque unité de données soit transférée à une mémoire locale distincte;
(i) simultanément avec l'étape (h), on transfère à la première co-mémoire (21) la même unité de données qui est en train d'être transférée à la première mémoire locale (13a), et à la deuxième co-mémoire (25) la même unité de données qui est en train d'être transférée à la n-ième mémoire locale (13n).

14. La méthode selon la revendication 11, pour lire ou stocker des données, caractérisée en plus par l'étape suivante:
(d) on lit simultanément des données dans les mémoires locales (13) et dans au moins une des co-mémoires (21), les données étant lues dans une ligne (70; 72; 75) des n mémoires locales, et dans une ligne différente (71; 73; 76) de la ou des co-mémoires (21).

15. La méthode selon la revendication 11, le grand groupement de données (40) ayant au moins H lignes, et: chacune des mémoires locales (13a-13n) et chacune des co-mémoires (21; 25) étant capable de stocker au moins 2H lignes x 1 colonne de données; les données stockées dans les premières H lignes x n colonnes de la mémoire locale provenant d'un premier sous-groupement (41) de H lignes et d'un premier groupe de n colonnes contiguës du groupement plus grand, et les deuxièmes H lignes x n colonnes contiguës provenant d'un deuxième sous-groupement (42) des mêmes H lignes et d'un deuxième groupe de n colonnes contiguës du groupement plus grand; et la largeur des colonnes de la mémoire locale et des co-mémoires étant d'un seul bit; la méthode étant caractérisée en plus par l'étape suivante:
(d) on lit simultanément des données dans les mémoires locales (13a-13n) et dans au moins une des co-mémoires (21), les données étant lues dans une ligne (70; 72; 75) des n mémoires locales, et dans une ligne différente (71; 73; 76) de la ou des co-mémoires.

16. La méthode selon la revendication 11, pour lire ou stocker des données, le grand groupement (40) de données ayant au moins H lignes; chacune des mémoires locales (13a-13n) et chacune des co-mémoires (21; 25) étant capable de stocker au moins 3H lignes x 1 colonne de données; les lignes (80, 81, 82) dans les n mémoires locales (13) et les co-mémoires ayant des adresses correspondantes de lignes;les données stockées dans les premiers H lignes x n colonnes des mémoires locales provenant d'un premier sous-groupement (41) de H lignes et d'un premier groupe de n colonnes contiguës du groupement plus grand, les données stockées dans les deuxièmes H lignes x n colonnes contiguës des mémoires locales provenant d'un deuxième sous-groupement (42) des mêmes H lignes et d'un deuxième groupe de n colonnes contiguës du groupement plus grand, et les données stockées dans les troisième H lignes x n colonnes contiguës des mémoires locales provenant d'un troisième sous-groupement (43) des mêmes H lignes et d'un troisième groupe de n colonnes contiguës du groupement plus grand; la méthode étant caractérisée en plus par l'étape suivante: on lit simultanément des données dans les mémoires locales, dans la première co-mémoire et dans la deuxième co-mémoire, les données étant lues dans une ligne (72) des n mémoires locales, dans une ligne différente (73) de la première co-mémoire, et dans une ligne encore différente (74) de la deuxième co-mémoire, les adresses des lignes (73, 74) lues simultanément dans la première co-mémoire et dans la deuxième co-mémoire étant distancées de H lignes dans des directions opposées par rapport à l'adresse de la ligne (72) des n mémoires locales qui est en train d'être lue.
